# EUROPÄISCHE PATENTANMELDUNG

(11) **EP 2 348 205 A2**
(43) Veröffentlichungstag der Anmeldung: **27.07.2011**
(21) Anmeldenummer: 10195127.5
(22) Anmeldetag: 15.12.2010
(51) Int. Cl.: F01N 13/14, F01N 13/08, F01N 3/28, F16L 59/02

(54) **Rohrkörper und Abgasanlage**

(30) Priorität: 20.01.2010 DE 102010004960
(71) Anmelder: J. Eberspächer GmbH & Co. KG, 73730 Esslingen (DE)
(72) Erfinder: Oesterle, Jörg, 89150, Laichingen (DE); Jebasinski, Rolf, 70794, Filderstadt (DE); Wirth, Georg, 73230, Kirchheim/Teck (DE); Grün, Matthias, 73776, Altbach (DE)
(74) Vertreter: BRP Renaud & Partner

(57) **Zusammenfassung**

Die Erfindung betrifft einen Abgas führenden Rohrkörper (1) für eine Abgasanlage (2) einer Brennkraftmaschine, insbesondere eines Kraftfahrzeugs, wobei der Rohrkörper (1) an seiner dem Abgas zugewandten Innenseite (5) und/oder an seiner vom Abgas abgewandten Außenseite (6) mit einer Beschichtung (7, 8) versehen ist, die aus einer Kompositkeramik auf Nanopartikelbasis besteht.

## Beschreibung

Die vorliegende Erfindung betrifft einen Abgas führenden Rohrkörper für eine Abgasanlage einer Brennkraftmaschine, insbesondere eines Kraftfahrzeugs. Die Erfindung betrifft außerdem eine Abgasanlage mit wenigstens einem derartigen Rohrkörper.

Innerhalb einer Abgasanlage kann es aus unterschiedlichen Gründen erforderlich sein, eine thermische Isolation nach außen bzw. nach innen zu realisieren. Zum einen kann es erforderlich sein, eine Umgebung der Abgasanlage vor den hohen Temperaturen der in der Abgasanlage transportierten Abgase zu schützen. Hierzu kann die Abgasanlage zumindest bereichsweise nach außen thermisch isoliert werden. Zum anderen kann es wünschenswert sein, das hohe Temperaturniveau des in der Abgasanlage transportierten Abgases beizubehalten, bspw. um für bestimmte Abgasbehandlungseinrichtungen möglichst rasch eine vorbestimmte Betriebstemperatur oder Regenerationstemperatur erreichen zu können bzw. um auch bei Betriebszuständen der Brennkraftmaschine, bei denen vergleichsweise wenig Wärme über das Abgas abgeführt wird, eine bestimmte Betriebstemperatur beibehalten zu können. Hierzu kann die Abgasanlage zumindest bereichsweise nach innen thermisch isoliert werden. Beispielsweise benötigt ein Oxidationskatalysator ebenso wie ein SCR-Katalysator oder ein NOₓ-Speicherkatalysator eine vorbestimmte Betriebstemperatur, um die gewünschte Abgasreinigungsfunktion mit hinreichender Effektivität durchführen zu können. Ferner benötigt z.B. ein Partikelfilter eine bestimmte Regenerationstemperatur, um einen Regenerationsprozess durchführen zu können.

Um innerhalb einer Abgasanlage bspw. einen Rohrkörper thermisch zu isolieren, ist es grundsätzlich möglich, den Rohrkörper doppelwandig auszuführen, derart, dass innerhalb seiner Wandung eine Luftspaltisolation realisiert wird. Nachteilig ist dabei, dass eine derartige doppelwandige Bauweise einerseits vergleichsweise viel Bauraum benötigt und andererseits das Bauteilgewicht erhöht. Sofern versucht wird, außen am Rohrkörper eine Isolationsschicht anzubringen, besteht zusätzlich das Problem, dass die Abgasanlage hohen Temperaturschwankungen ausgesetzt ist, so dass bereits kleine Abweichungen der thermischen Ausdehnungskoeffizienten zwischen dem jeweiligen Rohrkörper und der jeweiligen Beschichtung die Dauerhaltbarkeit einer solchen Beschichtung erschweren.

Die vorliegende Erfindung beschäftigt sich mit dem Problem, für einen Rohrkörper der eingangs genannten Art bzw. für eine damit ausgestattete Abgasanlage eine verbesserte Ausführungsform anzugeben, die sich insbesondere durch einen geringen Bauraumbedarf sowie durch ein geringes Gewicht auszeichnet. Ferner soll eine vergleichsweise gute Dauerhaltbarkeit erreicht werden.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Rohrkörper mit einer Kompositkeramik zu beschichten, die auf Nanopartikeln basiert. Eine solche Beschichtung kann insbesondere thermisch isolierend ausgestaltet sein. Zum Beispiel kann ihre Emissivität zumindest in einem vorbestimmten Temperaturbereich ≤ 0,5 sein. Dabei kann vorgesehen sein, den Rohrkörper ausschließlich an einer dem Abgas zugewandten Innenseite mit der Beschichtung aus Kompositkeramik auf Nanopartikelbasis zu versehen. Hierdurch kann bei entsprechender Emissivität der Strahlungswärmeübergang vom Abgas auf den Rohrkörper signifikant reduziert werden. Alternativ ist es möglich, den Rohrkörper ausschließlich an einer vom Abgas abgewandten Außenseite mit der Beschichtung aus Kompositkeramik auf Nanopartikelbasis zu versehen. Hierdurch wird die Wärmeübertragung vom Rohrkörper in die Umgebung, also insbesondere die Wärmestrahlung signifikant reduziert. Ferner ist es ebenso möglich, den Rohrkörper sowohl an seiner Innenseite als auch an seiner Außenseite jeweils mit einer Beschichtung aus Kompositkeramik auf Nanopartikelbasis auszustatten, um so einerseits die Wärmeübertragung vom Abgas auf den Rohrkörper und andererseits den Wärmeübergang vom Rohrkörper auf die Umgebung zu reduzieren.

Eine Kompositkeramik besteht üblicherweise aus einer Zusammensetzung unterschiedlicher Keramikwerkstoffe, die bspw. durch einen Sintervorgang miteinander verbunden werden. Hierzu können die einzelnen keramischen Werkstoffe in Form von Partikeln vorliegen, die dann zusammen die Kompositkeramik bilden. Ebenso ist es möglich, Keramikpartikel in eine Keramikmatrix einzubinden. Bei einer Kompositkeramik auf Nanopartikelbasis besitzen die zum Herstellen der Kompositkeramik verwendeten Partikel eine Korngröße im Nanometerbereich. Dabei sind einstellige bis dreistellige Nanometerwerte möglich.

Auf Nanopartikelbasis hergestellte Kompositkeramik kann durch Auswahl und Zusammenstellung der verwendeten Nanopartikel gezielt hinsichtlich unterschiedlicher Parameter gestaltet werden. Beispielsweise kann für die Beschichtung somit ein Wärmedehnungskoeffizient eingestellt werden, der quasi gleich groß ist wie der Wärmedehnungskoeffizient des Rohrkörpers. Hierdurch kann eine besonders intensive und dauerstabile Verbindung zwischen Beschichtung und Rohrkörper für den gesamten thermischen Einsatzbereich des Rohrkörpers bzw. der Abgasanlage realisiert werden. Ferner lassen sich thermische Emissionskoeffizienten, so genannte Emissivitäten, vergleichsweise genau einstellen. Hierdurch ist es insbesondere möglich, die Wärmeabstrahlung nach außen signifikant zu reduzieren. Ein weiterer besonderer Vorteil derartiger Beschichtungen ist, dass es ausreicht, diese vergleichsweise dünn auf den Rohrkörper aufzutragen, um die gewünschte thermische Isolationswirkung zu erzielen. Dementsprechend benötigt eine derartige Beschichtung kaum Bauraum und führt außerdem zu keiner signifikanten Gewichtserhöhung des Rohrkörpers.

Beispielsweise kann die jeweilige Beschichtung so ausgelegt werden, dass sie im Infrarotbereich eine Emissivität von etwa 0,2 erreicht. Im Unterschied dazu besitzt ein unbeschichteter Metallkörper eine Emissivität von etwa 0,9. Mit anderen Worten, mit Hilfe der Beschichtung kann eine drastische Reduzierung der Wärmestrahlung realisiert werden.

Besonders vorteilhaft ist eine Ausführungsform, bei welcher die jeweilige Beschichtung hinsichtlich ihrer Schichtdicke dünner ist als eine Wandstärke des Rohrkörpers. Die Beschichtungen können bspw. in einem Bereich von 1/100 bis 1/10 der Wandstärke des Rohrkörpers realisiert werden. Eine typische Wandstärke für einen Rohrkörper einer Abgasanlage beträgt bspw. 1,5 mm. Die Beschichtungen können dagegen deutlich dünner realisiert werden, bspw. mit einer Beschichtungsdicke von 0,015 mm bis 0,15 mm. Sie trägt daher auf die Wandstärke des Rohrkörpers kaum auf.

Sofern beim Rohrkörper sowohl die Außenseite als auch die Innenseite mit einer derartigen Beschichtung versehen ist, kann es gemäß einer vorteilhaften Ausführungsform vorgesehen sein, die an der Innenseite angebrachte Innenbeschichtung hinsichtlich wenigstens eines Parameters anders auszugestalten bzw. auszulegen als die an der Außenseite angebrachte Außenbeschichtung. Geeignete Parameter sind bspw. Porosität der Beschichtung, Oberflächenrauigkeit der Beschichtung, Schichtdicke, Wärmedehnungskoeffizient, Wärmeemissionskoeffizient, E-Modul, Zugfestigkeit, Druckfestigkeit.

Zusätzlich oder alternativ kann vorgesehen sein, die jeweilige Beschichtung in ihrer Dickenrichtung und/oder in der Längsrichtung des Rohrkörpers und/oder in der Umfangsrichtung des Rohrkörpers so auszugestalten, dass zumindest ein Parameter variiert. Beispielsweise kann es in gebogenen Rohrkörpern zweckmäßig sein, die jeweilige Beschichtung im Außenbogen anders auszugestalten als im Innenbogen.

Besonders vorteilhaft kann eine andere Ausführungsform sein, bei der die jeweilige Beschichtung mit einem temperaturabhängigen Wärmeemissionskoeffizienten versehen ist. Beispielsweise lässt sich dadurch der Rohrkörper hinsichtlich seiner Beschichtungen besser an einen vorbestimmten Betriebszustand oder Betriebstemperaturbereich der Abgasanlage anpassen.

Beispielsweise kann vorgesehen sein, den Wärmeemissionskoeffizienten unterhalb einer ersten Temperatur kleiner auszulegen als oberhalb einer zweiten Temperatur, die entweder gleich groß ist wie die erste Temperatur oder größer ist als die erste Temperatur. Beispielsweise kann dadurch die Beibehaltung einer vorbestimmten Mindesttemperatur oder Betriebstemperatur realisiert werden. Zum Beispiel kann, so lange die Temperatur des Rohrkörpers unterhalb einer vorbestimmten Grenztemperatur von z.B. 600°C liegt, ein geringer Wärmeübergang sowie eine geringe Wärmeabstrahlung erwünscht sein, um eine nachfolgende (emissionsrelevante) Komponente, z. Bsp. einen SCR-Katalysator, auf ihrer Betriebstemperatur zu halten. Ferner kann durch die vorgeschlagene Bauweise ein Überhitzungsschutz realisiert werden, indem bspw. bei einem hohen Wärmeanfall im Abgas, bspw. ab einer vorbestimmten anderen Grenztemperatur von z.B. 700 °C, möglichst viel Wärme abfließt. Erreicht wird dies bspw. durch eine mit der Temperatur variierende Emissivität, derart, dass sie mit steigender Temperatur zunimmt.

Grundsätzlich kann die jeweilige Beschichtung im Wesentlichen den gleichen Wärmedehnungskoeffizienten aufweisen wie der Rohrkörper. Dies führt zu einer besonders hohen Dauerstabilität sowie zu konstanten Eigenschaften über den gesamten Temperaturbereich.

Alternativ ist eine Ausführungsform, bei welcher die jeweilige Beschichtung gezielt einen kleineren Wärmdehnungskoeffizienten aufweist als der Rohrkörper. Bei dieser Ausführungsform ist die jeweilige Beschichtung mit einer Mikrostruktur versehen, derart, dass die jeweilige Beschichtung aus einer Vielzahl einzelner Beschichtungsabschnitte besteht, die jeweils fest mit dem Rohrkörper verbunden sind, jedoch mit der thermischen Dehnung des Rohrkörpers relativ zueinander beweglich sind. Eine derartige Mikrostruktur kann bspw. durch oberflächliche Nuten oder durch Risse in der Beschichtung realisiert werden. Mit Hilfe einer derartigen Mikrostruktur kann in Verbindung mit der unterschiedlichen Wärmedehnung der Beschichtung zumindest ein von der Temperatur abhängiger Parameter realisiert werden. Beispielsweise sind die vorstehend genannten Nuten bzw. Risse bei kleinen Temperaturen vergleichsweise klein bzw. geschlossen, wodurch die jeweilige Beschichtung eine erhöhte Effektivität hinsichtlich der thermischen Isolation besitzt. Bei höheren Temperaturen bewegen sich die einzelnen Beschichtungsabschnitte aufgrund der Ausdehnung des Rohrkörpers auseinander, wodurch die genannten Nuten bzw. Risse größer werden. In der Folge verschlechtern sich die isolierenden Eigenschaften der Beschichtung. Mit anderen Worten, mit zunehmender Temperatur nimmt die thermische Isolierung ab, was den Wärmeabfluss vergrößert und insoweit auch die Wirkung eines Überhitzungsschutzes erzielt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Querschnitt durch einen Rohrkörper,
- Fig. 2: einen Längsschnitt des Rohrkörpers aus Fig. 1,
- Fig. 3: einen Querschnitt des Rohrkörpers wie in Fig. 1, jedoch bei einer anderen Ausführungsform,
- Fig. 4: einen Längsschnitt des Rohrkörpers aus Fig. 3,
- Fig. 5: eine Seitenansicht auf einen Teilbereich des Rohrkörpers aus Fig. 3 und 4.

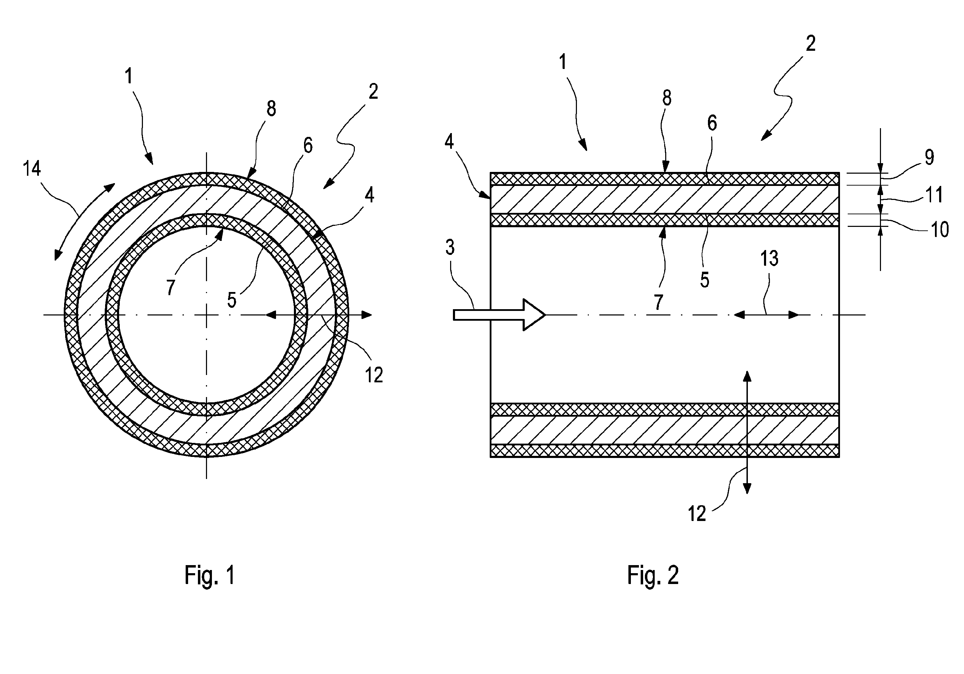

Die Fig. 1 bis 4 zeigen jeweils einen Teil eines Rohrkörpers 1 im Querschnitt bzw. im Längsschnitt. Der Rohrkörper 1 bildet bevorzugt einen Bestandteil einer im Übrigen nicht dargestellten Abgasanlage 2, so dass die Abgasanlage 2 zumindest einen solchen Rohrkörper 1 aufweist. Dabei ist klar, dass die Abgasanlage 2 auch zwei oder mehr derartige Rohrkörper 1 aufweisen kann.

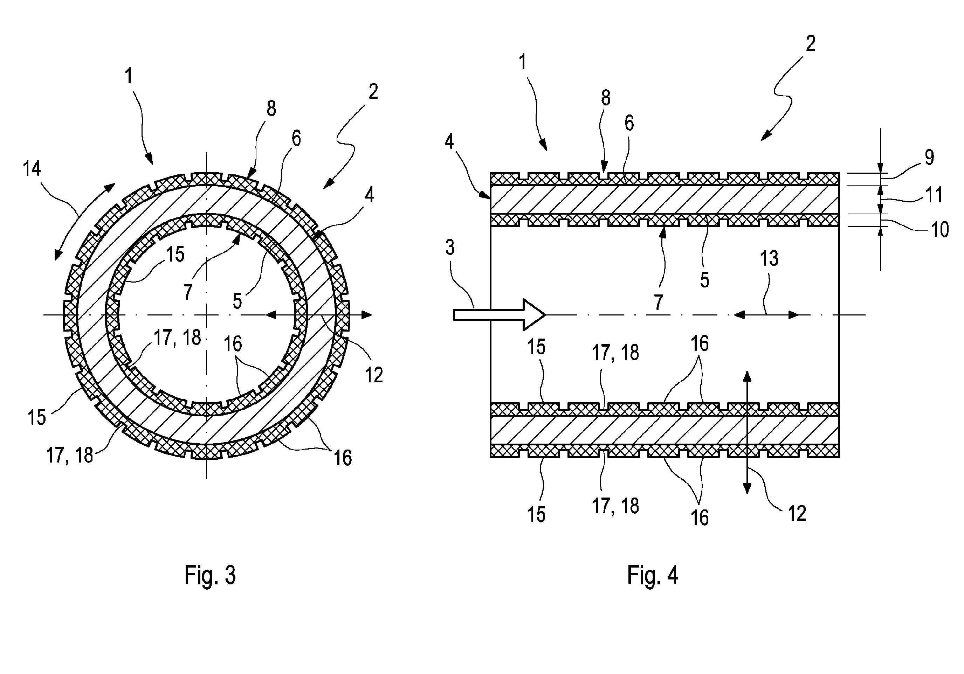

Die Abgasanlage 2 dient zum Abführen von Abgas einer Brennkraftmaschine, die insbesondere in einem Kraftfahrzeug angeordnet sein kann. Dementsprechend dient der Rohrkörper 1 ebenfalls zum Führen von Abgas. Eine entsprechende Abgasströmung ist in den Fig. 2 und 4 durch einen Pfeil angedeutet und mit 3 bezeichnet.

Im Beispiel der Fig. 1 bis 4 ist der Rohrkörper 1 mit einem kreisförmigen Querschnitt realisiert. Es ist klar, dass grundsätzlich auch andere Querschnitte vorgesehen sein können. Dabei kann es sich um andere runde Querschnitte oder um beliebige Querschnittsgeometrien handeln.

Der Rohrkörper 1 besitzt eine Wand 4, deren Innenfläche eine Innenseite 5 des Rohrkörpers 1 bildet und deren Außenfläche eine Außenseite 6 des Rohrkörpers 1 bildet. Die Innenseite 5 ist dem Abgas zugewandt, während die Außenseite 6 vom Abgas abgewandt ist.

Bei den hier gezeigten Ausführungsformen trägt der Rohrkörper 1 an seiner Innenseite 5 eine Beschichtung 7, die im Folgenden auch als Innenbeschichtung 7 bezeichnet wird. Außerdem trägt der Rohrkörper 1 an seiner Außenseite 6 eine Beschichtung 8, die im Folgenden auch als Außenbeschichtung 8 bezeichnet wird. Bei einer ersten alternativen Ausführungsform des Rohrkörpers 1 kann vorgesehen sein, nur an der Innenseite 5 eine derartige Beschichtung 7 anzubringen. Bei einer zweiten alternativen Ausführungsform des Rohrkörpers 1 kann vorgesehen sein, nur an der Außenseite 6 eine derartige Beschichtung 8 vorzusehen. Unabhängig davon, ob nur die Innenbeschichtung 7 oder nur die Außenbeschichtung 8 vorhanden ist oder ob beide Beschichtungen 7, 8 vorhanden sind, besteht die jeweilige Beschichtung 7, 8 aus einer Kompositkeramik auf Nanopartikelbasis. Mit anderen Worten, die jeweilige Beschichtung 7, 8 ist mit Hilfe von Keramikpartikeln hergestellt, deren Korngröße im Nanometerbereich liegt. Dabei kann insbesondere vorgesehen sein, Keramikpartikel in eine Keramikmatrix einzubinden, um die Kompositkeramik zu bilden. Bevorzugt wird eine derartige Kompositkeramik mittels eines Sintervorgangs hergestellt. Beispielsweise kann die jeweilige Oberfläche der Wand 4 pulverbeschichtet werden, wobei dann die Pulverbeschichtung anschließend gesintert wird. Grundsätzlich sind jedoch auch andere Herstellungsverfahren bzw. Beschichtungsverfahren denkbar, wie z. Bsp. eine Sprühbeschichtung.

Bevorzugt besitzt die jeweilige Beschichtung 7, 8 eine Schichtdicke 9 bzw. 10, die kleiner ist als eine Wandstärke 11 der Wand 4 des Rohrkörpers 1. Die Schichtdicke 9, 10 ist im Beispiel maximal halb so groß wie die Wandstärke 11. Zweckmäßig sind die Beschichtungen 7, 8 jedoch deutlich dünner als die Wand 4. Insbesondere ist die Wand 4 mindestens zehn Mal dicker als die jeweilige Beschichtung 7, 8. Zweckmäßig können die Beschichtungen 7, 8 so realisiert werden, dass ihre Schichtdicke 9, 10 in einem Bereich von 1/100 bis 1/10 der Wandstärke 11 des Rohrkörpers 1 liegt. Im Unterschied dazu beträgt die Wandstärke 11 üblicherweise etwa 1 mm oder liegt in einem Bereich von 0,5 mm bis 2,5 mm.

Sofern wie bei den hier gezeigten Ausführungsformen beide Seiten 5, 6 beschichtet sind, kann gemäß einer bevorzugten Ausführungsform vorgesehen sein, die Innenbeschichtung 7 und die Außenbeschichtung 8 hinsichtlich wenigstens eines Parameters unterschiedlich auszugestalten. Beispielsweise können die beiden Beschichtungen 7, 8 hinsichtlich zumindest eines der folgenden Parameter unterschiedlich gestaltet bzw. ausgelegt sein: Porosität der Beschichtung 7, 8, Oberflächenrauigkeit der Beschichtung 7, 8, Schichtdicke 9, 10, Wärmedehnungskoeffizient sowie Wärmeemissionskoeffizient. Hierdurch ist es möglich, die jeweilige Beschichtung 7, 8 optimal an unterschiedliche Anforderungen anzupassen. Beispielsweise muss die Innenbeschichtung 7 speziell an die aggressiven Abgase adaptiert sein. Sie muss den hohen Abgastemperaturen standhalten können und soll eine möglichst geringe Wandreibung für die Abgasströmung 3 erzeugen, um einen möglichst niedrigen Durchströmungswiderstand innerhalb des Rohrkörpers 1 zu realisieren. Im Unterschied dazu muss die Außenbeschichtung 8 den vergleichsweise aggressiven Umgebungsbedingungen einer Abgasanlage 2 standhalten können. Je nach Auslegung kann es auch erforderlich sein, dass die Außenbeschichtung 8 auch bei geringen Luftgeschwindigkeiten eine möglichst günstige Wärmeübertragung vom Rohrkörper 1 an die den Rohrkörper 1 von außen anströmende Luft ermöglicht.

Zusätzlich oder alternativ zu den unterschiedlichen Beschichtungen 7, 8 ist es außerdem möglich, zumindest eine der Beschichtungen 7, 8 in ihrer in den Fig. 1 bis 4 durch einen Pfeil angedeuteten Dickenrichtung 12 mit einem variierenden Parameter auszustatten. Zusätzlich oder alternativ kann die jeweilige Beschichtung 7, 8 in einer durch einen Doppelpfeil angedeuteten Längsrichtung 13 des Rohrkörpers 1 zumindest einen variierenden Parameter besitzen. Zusätzlich oder alternativ kann die jeweilige Beschichtung 7, 8 in einer durch einen Doppelpfeil angedeuteten Umfangsrichtung 14 zumindest einen variierenden Parameter besitzen. Beispielsweise kann in der Längsrichtung 13 die Emissivität, also der Wärmeemissionskoeffizient, variieren. Beispielsweise kann in der Umfangsrichtung 14 der Wärmedehnungskoeffizient variieren, bspw. bei einem gebogenen Rohrkörper 1. Ebenso ist es möglich, die Porosität in der Dickenrichtung 12 zu variieren.

Parameter, die innerhalb der jeweiligen Beschichtung 7, 8 in der Dickenrichtung 12 und/oder in der Längsrichtung 13 und/oder in der Umfangsrichtung 14 variiert werden können, sind insbesondere Porosität, Rauigkeit, Schichtdicke, Wärmedehnungskoeffizient, Wärmeemissionskoeffizient, wobei auch beliebige Kombinationen derartiger Parameter denkbar sind. Die Variation zumindest eines Parameters innerhalb der jeweiligen Beschichtung 7, 8 in der Dickenrichtung 12 und/oder in der Längsrichtung 13 und/oder in der Umfangsrichtung 14 kann dabei verwirklicht werden unabhängig davon, ob zwei Beschichtungen 7, 8 vorgesehen sind oder ob nur eine Innenbeschichtung 7 oder nur die Außenbeschichtung 8 vorgesehen ist.

Gemäß einer weiteren besonders vorteilhaften Ausführungsform, die fakultativ oder kumulativ mit zumindest einer der vorhergehenden Ausführungsformen realisiert werden kann, kann zumindest eine der Beschichtungen 7, 8 mit einem temperaturabhängigen Wärmeemissionskoeffizienten versehen sein. Mit anderen Worten, der Wärmeemissionskoeffizient der jeweiligen Beschichtung 7, 8 ändert sich mit der Temperatur. Vorzugsweise kann vorgesehen sein, dass der Wärmeemissionskoeffizient unterhalb einer ersten Temperatur T1 kleiner ist als oberhalb einer zweiten Temperatur T2. Dabei die kann die zweite Temperatur T2 größer sein als die erste Temperatur T1: T2 > T1. Ebenso kann es theoretisch möglich sein, die beiden Temperaturen T1, T2 etwa gleich zu groß zu wählen: T1=T2, wodurch ein sprunghafter Emissivitätswechsel realisierbar wäre. Beispielsweise kann vorgesehen sein, die erste Temperatur T1 bei etwa 600°C zu wählen und die zweite Temperatur bei etwa 700°C einzustellen. Hinsichtlich des Wärmeemissionskoeffizienten ist es nun möglich, den Rohrkörper 1 mit Hilfe der jeweiligen Beschichtung 7, 8 so auszugestalten, dass er bis zu einer Temperatur von etwa 600°C eine vergleichsweise kleine Emissivität besitzt, wodurch die jeweilige Beschichtung 7, 8 eine vergleichsweise hohe thermische Isolationswirkung aufweist. Dies kann zweckmäßig sein, um in Betriebsphasen der Brennkraftmaschine, in der die abgeführten Abgase nur vergleichsweise wenig Wärme mitführen, eine vorbestimmte Betriebstemperatur aufrecht zu erhalten. Hierdurch kann bspw. eine ordnungsgemäße Funktion für einen Oxidationskatalysator oder einen SCR-Katalysator oder einen NOX-Speicherkatalysator realisiert werden. Falls jedoch die Brennkraftmaschine in Betriebszuständen arbeitet, z. Bsp. Volllast, bei denen vergleichsweise viel Wärme im Abgas enthalten ist, kann es bei einer derartig effizienten thermischen Isolation leicht zu einer Überhitzung bestimmter Bauteile kommen. Dem wirkt der hier unterbreitete Vorschlag entgegen, da die Emissivität oberhalb der zweiten Temperatur T2 deutlich höher ausgelegt ist, so dass der Rohrkörper 1 deutlich mehr Wärme nach außen abführen und insbesondere abstrahlen kann. Hierdurch kann gewissermaßen ein Überhitzungsschutz mit Hilfe einer temperaturabhängig arbeitenden thermischen Isolation realisiert werden. Dies ist durch eine entsprechende Auslegung der jeweiligen Beschichtung 7, 8 möglich.

Zwischen den Temperaturen T1, T2 kann eine graduelle Änderung der Emissivität erfolgen. Auch kann sich die Emissivität unterhalb T1 und oberhalb T2 graduell ändern, so dass insbesondere ein proportionaler Zusammenhang zwischen Temperatur und Emissivität vorliegt.

Die Fig. 1 und 2 zeigen eine Ausführungsform, bei welcher die jeweilige Beschichtung 7, 8 zweckmäßig etwa den gleichen Wärmedehnungskoeffizienten wie der Rohrkörper 1 bzw. wie die Wand 4 des Rohrkörpers 1 aufweist. In der Folge können die Beschichtungen 7, 8 einer thermischen Dehnung, also einer Ausdehnung sowie einer Schrumpfung, der Wand 4 gleichförmig folgen, ohne dass es zu thermisch bedingten Spannungen zwischen der Wand 4 und der jeweiligen Beschichtung 7, 8 kommt. Dementsprechend ist die Anbindung der jeweiligen Beschichtung 7, 8 an der Wand 4 nur vergleichsweise gering belastet, so dass sich eine vergleichsweise hohe Dauerhaltbarkeit für die Beschichtung 7, 8 am Rohrkörper 1 bzw. an der Wand 4 ergibt.

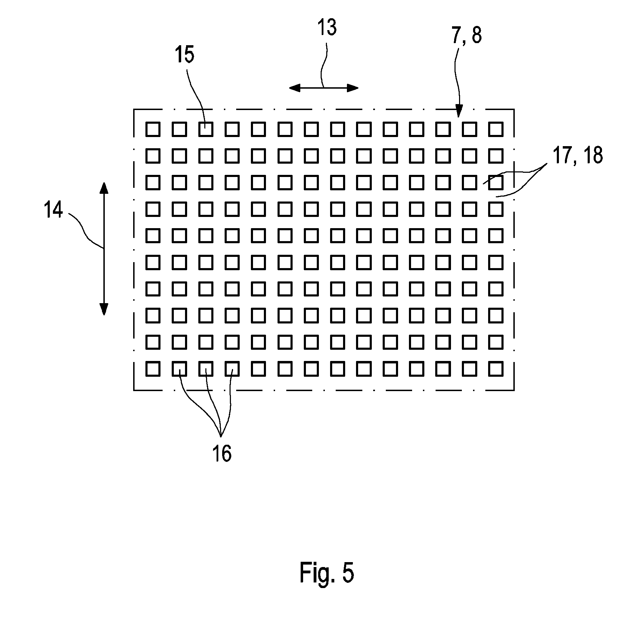

Im Unterschied dazu zeigen die Fig. 3 bis 5 eine Ausführungsform, bei welcher die jeweilige Beschichtung 7, 8 einen kleineren Wärmedehnungskoeffizienten aufweist als der Werkstoff des Rohrkörpers 1 bzw. der Wand 4. Bei einer derartigen Ausführungsform besitzt die jeweilige Beschichtung 7, 8 eine Mikrostruktur 15. Im Beispiel der Fig. 3 bis 5 sind beide Beschichtungen 7, 8 mit einer derartigen Mikrostruktur 15 versehen. Es ist klar, dass grundsätzlich auch eine Ausführungsform denkbar ist, die nur die Innenbeschichtung 7 oder nur die Außenbeschichtung 8 aufweist, die dann mit der jeweiligen Mikrostruktur 15 versehen ist. Ebenso ist eine Ausführungsform denkbar, bei der sowohl die Innenbeschichtung 7 als auch die Außenbeschichtung 8 vorhanden sind, wobei jedoch nur eine der beiden Beschichtungen 7, 8 einen kleineren Wärmedehnungskoeffizienten als der Rohrkörper 1 aufweist und mit der Mikrostruktur 15 ausgestattet ist.

Die jeweilige Mikrostruktur 15 charakterisiert sich insbesondere dadurch, dass die mit der Mikrostruktur 15 versehene Beschichtung 7, 8 aus einer Vielzahl einzelner Beschichtungsabschnitte 16 besteht. Die einzelnen Beschichtungsabschnitte 16 sind jeweils fest mit dem Rohrkörper 1 bzw. mit dessen Wand 4 verbunden. Relativ zueinander sind sie jedoch mit dem Rohrkörper 1 beweglich, da sie thermischen Dehnungseffekten des Rohrkörpers 1 folgen können.

Die jeweilige Mikrostruktur 15 kann bspw. durch oberflächlich eingearbeitete Nuten 17 gebildet sein, wobei die jeweilige Nut 17 die jeweilige Beschichtung 7, 8 in der Dickenrichtung 12 zumindest teilweise durchdringt. Im gezeigten Beispiel durchsetzen die Nuten 17 die Beschichtung 7, 8 nicht vollständig. Grundsätzlich ist jedoch auch eine Ausführungsform möglich, bei der die Nuten 17 die Beschichtung 7, 8 in der Dickenrichtung 12 vollständig durchdringen, so dass der Nutgrund dann durch die jeweilige Oberfläche 5, 6 der Wand 4 gebildet ist. Alternativ zu den Nuten 17 kann die Mikrostruktur 15 auch mit Hilfe von Rissen 18 gebildet sein, welche die jeweilige Beschichtung 7, 8 in der Dickenrichtung 12 zumindest teilweise, vorzugsweise vollständig durchdringen.

Die Nuten 17 können durch eine spanende Bearbeitung, mittels Ätztechniken oder mittels Schablonen hergestellt werden. Die Risse 18 können bspw. dadurch hergestellt werden, dass die jeweilige Beschichtung 7, 8 bei einer vergleichsweise niedrigen Temperatur aufgebracht wird und anschließend der Rohrkörper 1 mit der jeweiligen Beschichtung 7, 8 erwärmt wird. Durch die thermische Dehnung des Rohrkörpers 1 kommt es aufgrund des entsprechend niedrigen Wärmedehnungskoeffizienten der jeweiligen Beschichtung 7, 8 zur Rissbildung. Um die Ausbildung der Risse 18 in einer vorbestimmten Weise erzeugen zu können, ist es insbesondere möglich, die Beschichtung 7, 8 in gewünschter Weise zu gravieren, so dass die Rissbildung dann entlang der Gravur entsteht. Besonders vorteilhaft ist eine Ausführungsform, bei welcher die Mikrostruktur 15 so ausgelegt ist, dass die Nuten 17 bzw. die Risse 18 unterhalb einer vorbestimmten Temperatur vollständig oder im Wesentlichen vollständig geschlossen sind. Dies lässt sich bei der zuvor erwähnten Vorgehensweise zur Herstellung der Risse 18 besonders einfach realisieren.

Durch die Ausgestaltung der jeweiligen Beschichtung 7, 8 mit der Mikrostruktur 15 ist es insbesondere möglich, zumindest einen Parameter der Beschichtung 7, 8 temperaturabhängig zu gestalten. Beispielsweise kann die thermische Isolationswirkung der jeweiligen Beschichtung 7, 8 mit Hilfe der Mikrostruktur 15 mit einer deutlichen Temperaturabhängigkeit versehen werden. Bei einer niedrigen Temperatur sind die Nuten 17 bzw. die Risse 18 vergleichsweise klein und insbesondere geschlossen, wodurch die jeweilige Beschichtung 7, 8 eine vergleichsweise hohe Effektivität hinsichtlich ihrer thermischen Isolationswirkung besitzt. Mit zunehmender Temperatur dehnt sich der Rohrkörper 1 stärker aus als die jeweilige Beschichtung 7, 8, wodurch sich zum einen die Beschichtungsabschnitte 16 relativ zueinander bewegen, wobei zum anderen die Nuten 17 bzw. die Risse 18 größer werden. Hierdurch verschlechtert sich die thermische Isolationswirkung der jeweiligen Beschichtung 7, 8. In der Folge kann der Rohrkörper 1 mit zunehmender Temperatur mehr Wärme an die Umgebung übertragen und insbesondere in die Umgebung abstrahlen. Mit Hilfe dieser Bauweise ist es somit ebenfalls möglich, einen gewissen Überhitzungsschutz zu realisieren.

Die vorbeschriebenen unterschiedlichen Ausführungsformen lassen sich - soweit sinnvoll - quasi beliebig miteinander kombinieren.

Beim Rohrkörper 1 kann es sich bspw. um ein Rohr zum Zuführen von Abgas zu einer Abgasbehandlungseinrichtung oder zum Abführen von Abgas von einer Abgasbehandlungseinrichtung handeln. Ebenfalls kann es sich beim Rohrkörper 1 um ein Rohr innerhalb einer Abgasbehandlungseinrichtung handeln. Desweiteren kann es sich beim Rohrkörper 1 um ein Gehäuse oder um einen Gehäuseabschnitt, wie z. Bsp. ein Trichter oder ein Mantel, einer Abgasbehandlungseinrichtung handeln. Ferner kann es sich beim Rohrkörper 1 um ein Rohr oder um einen Kanal eines Abgaswärmetauschers oder eines Abgasrückführwärmetauschers handeln. Insoweit betrifft die vorliegende Erfindung auch eine Abgasbehandlungseinrichtung für eine Abgasanlage 2 einer Brennkraftmaschine, insbesondere eines Kraftfahrzeugs, die zumindest einen solchen Rohrkörper 1 enthält bzw. aufweist, und zwar insbesondere in Form eines Rohrs oder eines Gehäuses oder eines Gehäuseabschnitts. Desweiteren betrifft die vorliegende Erfindung auch einen Wärmetauscher, insbesondere für eine Abgasanlage 2 einer Brennkraftmaschine, vorzugsweise eines Kraftfahrzeug, bei dem zumindest ein Rohr durch einen solchen Rohrkörper 1 gebildet ist.

## Patentansprüche

1. Abgas führender Rohrkörper (1) für eine Abgasanlage (2) einer Brennkraftmaschine, insbesondere eines Kraftfahrzeugs, wobei der Rohrkörper (1) an seiner dem Abgas zugewandten Innenseite (5) und/oder an seiner vom Abgas abgewandten Außenseite (6) mit einer Beschichtung (7, 8) versehen ist, die aus einer Kompositkeramik auf Nanopartikelbasis besteht.

2. Rohrkörper nach Anspruch 1,
**dadurch gekennzeichnet,**
- **dass** die jeweilige Beschichtung (7, 8) dünner ist als eine Wandstärke (11) des Rohrkörpers (1),
- wobei insbesondere vorgesehen sein kann, dass eine Schichtdicke (9, 10) der jeweiligen Beschichtung (7, 8) in einem Bereich von 1/100 bis 1/10 der Wandstärke (11) des Rohrkörpers (1) beträgt.

3. Rohrkörper nach Anspruch 1 oder 2,
**dadurch gekennzeichnet,**
- **dass** beide Seiten (5, 6) beschichtet sind,
- **dass** die an der Innenseite (5) angebrachte Innenbeschichtung (7) hinsichtlich wenigstens eines Parameter anders ausgestaltet ist als die an der Außenseite (6) angebrachte Außenbeschichtung (8),
- wobei insbesondere vorgesehen sein kann, dass sich die Beschichtungen (7, 8) hinsichtlich wenigstens eines der folgenden Parameter voneinander unterscheiden: Porösität, Oberflächenrauigkeit, Schichtdicke, Wärmedehnungskoeffizient, Wärmeemissionskoeffizient, E-Modul, Zugfestigkeit, Druckfestigkeit.

4. Rohrkörper nach einem der Ansprüche 1 bis 3,
**dadurch gekennzeichnet,**
- **dass** die jeweilige Beschichtung (7, 8) in ihrer Dickenrichtung (12) und/oder in der Längsrichtung (13) des Rohrkörpers (1) und/oder in der Umfangsrichtung (14) des Rohrkörpers (1) wenigstens einen variierenden Parameter aufweist,
- wobei insbesondere vorgesehen sein kann, dass die jeweilige Beschichtung (7, 8) hinsichtlich wenigstens eines der folgenden Parameter in der jeweiligen Richtung (12, 13, 14) variiert: Porösität, Rauigkeit, Schichtdicke, Wärmedehnungskoeffizient, Wärmeemissionskoeffizient, E-Modul, Zugfestigkeit, Druckfestigkeit.

5. Rohrkörper nach einem der Ansprüche 1 bis 4,
**dadurch gekennzeichnet,**
- **dass** die jeweilige Beschichtung (7, 8) mit einem temperaturabhängigen Wärmeemissionskoeffizienten versehen ist,
- wobei insbesondere vorgesehen sein kann, dass der Wärmeemissionskoeffizient unterhalb einer ersten Temperatur (T1) kleiner ist als oberhalb einer zweiten Temperatur (T2), die entweder gleich groß ist wie die erste Temperatur (T1) oder größer ist als die erste Temperatur (T1).

6. Rohrkörper nach einem der Ansprüche 1 bis 5,
**dadurch gekennzeichnet,**
**dass** die jeweilige Beschichtung (7, 8) den gleichen Wärmedehnungskoeffizienten wie der Rohrkörper (1) aufweist.

7. Rohrkörper nach einem der Ansprüche 1 bis 5,
**dadurch gekennzeichnet,**
- **dass** die jeweilige Beschichtung (7, 8) einen kleineren Wärmedehnungskoeffizienten als der Rohrkörper (1) aufweist,
- **dass** die jeweilige Beschichtung (7, 8) eine Mikrostruktur (15) besitzt, derart, dass die jeweilige Beschichtung (15) aus einer Vielzahl einzelner Beschichtungsabschnitte (16) besteht, die jeweils fest mit dem Rohrkörper (1) verbunden sind, jedoch mit dem Rohrkörper (1) relativ zueinander beweglich sind.

8. Rohrkörper nach Anspruch 7,
**dadurch gekennzeichnet,**
- **dass** die Mikrostruktur (15) durch Risse (18) und/oder durch Nuten (17) gebildet ist, welche die jeweilige Beschichtung (7, 8) in der Dickenrichtung (12) zumindest teilweise durchdringen,
- wobei insbesondere vorgesehen sein kann, dass die Mikrostruktur (15) so ausgelegt ist, dass die Risse (18) und/oder die Nuten (17) unterhalb einer vorbestimmten Temperatur geschlossen sind.

9. Rohrkörper nach einem der Ansprüche 1 bis 8,
**dadurch gekennzeichnet,**
**dass** der Rohrkörper (1) zumindest eines der folgenden Bauteile ist:
- ein Rohr zum Zuführen von Abgas zu einer Abgasbehandlungseinrichtung,
- ein Rohr zum Abführen von Abgas von einer Abgasbehandlungseinrichtung,
- ein Rohr innerhalb einer Abgasbehandlungseinrichtung,
- ein Gehäuse oder ein Gehäuseabschnitt, wie z. Bsp. ein Trichter oder ein Mantel, einer Abgasbehandlungseinrichtung,
- ein Rohr oder ein Kanal eines Wärmetauschers, insbesondere eines Abgaswärmetauschers oder eines Abgasrückführwärmetauschers.

10. Abgasanlage einer Brennkraftmaschine, insbesondere eines Kraftfahrzeugs, mit mindestens einem Rohrkörper (1) nach einem der Ansprüche 1 bis 9.
